# DEMANDE DE BREVET EUROPEEN

(11) **EP 2 355 478 A1**
(43) Date de publication de la demande: **10.08.2011**
(21) Numéro de dépôt: 11152499.7
(22) Date de dépôt: 28.01.2011
(51) Int. Cl.: H04M 3/51, H04M 3/533, H04M 3/487

(54) **Procédés pour émettre un message vocal à la fin du message d'accueil d'un répondeur et pour déposer un message vocal sur un répondeur**

(30) Priorité: 28.01.2010 FR 1050589
(71) Demandeur: Neocom Multimedia, 13003 Marseille (FR)
(72) Inventeur: Derderian, Didier, 83330 Le Castellet (FR); François, Thierry, 75015 Paris (FR); Raimondeau, Stéphane, 85170 Le Poiré sur Vie (FR)
(74) Mandataire: Remy, Vincent Noel Paul

(57) **Abrégé**

L'invention évite de faire sonner le téléphone du destinataire et permet d'exécuter des mailings vocaux. Le procédé permet d'émettre automatiquement un message vocal pré-enregistré à la fin d'un message d'accueil d'un répondeur vocal. Il comprend consiste à exécuter les étapes suivantes :
-on écoute la ligne,
-on attend un silence d'au moins une durée prédéterminée avant de passer à l'étape suivante,
-on émet le message vocal pré-enregistré sur la ligne,
-pendant l'émission du message, on continue d'écouter la ligne,
-si le silence est interrompu sur la ligne, on revient à la première étape d'écoute de la ligne.

Est également protégé le programme d'ordinateur pour la mise en oeuvre du procédé et le serveur l'hébergeant.

## Description

**Il** existe de nombreuses circonstances dans lesquelles le fait d'atteindre directement le répondeur d'un destinataire serait utile. C'est le cas notamment pour délivrer des messages publicitaires ou, plus couramment, pour donner une information à un destinataire dont on sait qu'il n'est pas disponible pour décrocher son téléphone.

Chez certains opérateurs téléphoniques, une solution existe déjà qui consiste à accéder aux serveurs informatiques hébergeant les boites vocales de réception des abonnés pour y ajouter des messages vocaux dans un but d'information ou de publicité. Il s'agit alors d'utiliser des moyens informatiques pour accéder directement à l'espace de stockage des messages vocaux des abonnés. Cette solution ne peut pas fonctionner sans adaptation pour n'importe quel opérateur téléphonique.

La présente invention vise à proposer une solution multiopérateurs qui est indépendante de l'architecture matérielle et logicielle d'un opérateur téléphonique et peut donc fonctionner à destination de n'importe quel abonné, dès lors que ce dernier utilise une ligne téléphonique configurée pour renvoyer vers un répondeur vocal les appels téléphoniques reçus lorsque la ligne est occupée.

L'invention a pour objet un procédé pour émettre automatiquement un message vocal pré-enregistré à la fin d'un message d'accueil d'un répondeur vocal, ce procédé se caractérise en ce qu'il consiste à exécuter les étapes suivantes :
- on écoute la ligne,
- on attend un silence d'au moins une durée prédéterminée avant de passer à l'étape suivante,
- on émet le message vocal pré-enregistré sur la ligne,
- pendant l'émission du message, on continue d'écouter la ligne,
- si le silence est interrompu sur la ligne, on revient à la première étape d'écoute de la ligne.

Ce procédé permet de détecter automatiquement la fin d'un message d'accueil et de commencer au bon moment l'émission d'un message vocal prédéterminé sur le répondeur d'un destinataire.

Ainsi, l'invention permet d'attendre la fin d'un message vocal d'accueil avant d'émettre un message vocal et d'utiliser l'accès direct au répondeur vocal d'un destinataire pour déposer automatiquement un message pré-enregistré.

L'invention a ainsi également pour objet un procédé pour déposer automatiquement un message vocal pré-enregistré sur un répondeur vocal d'une ligne configurée pour renvoyer vers le répondeur vocal les appels téléphoniques reçus lorsque la ligne est occupée. Ce procédé se caractérise par le fait que l'on exécute d'abord les étapes suivantes pour accéder directement au répondeur vocal:
- on déclenche un premier groupe d'appels à destination de la ligne cible,
- on attend un premier délai prédéterminé, suffisamment long pour avoir placé la ligne à l'état occupé,
- on déclenche un nouvel appel à destination de la ligne,
- on stoppe les appels du premier groupe au bout d'un second délai prédéterminé, plus long que le premier délai mais suffisamment court pour ne pas avoir fait sonner le téléphone de la ligne.
puis, sur le nouvel appel, on exécute le procédé pour émettre automatiquement un message vocal pré-enregistré à la fin du message d'accueil du répondeur vocal, puis on stoppe le nouvel appel.

Ainsi, dans l'hypothèse où l'accès direct au répondeur vocal d'un destinataire serait utilisé pour déposer automatiquement un message pré-enregistré, l'invention propose également un procédé qui permet d'attendre la fin d'un message vocal d'accueil avant d'émettre un message vocal.

Grâce à ce procédé, on peut atteindre directement le répondeur d'un destinataire sans faire sonner son téléphone, donc sans le déranger.

Une fois le répondeur déclenché, il suffit d'écouter le message d'accueil du répondeur et de déposer le message vocal souhaité.

L'invention trouve une application particulièrement avantageuse dans le cas où l'on dépose des messages pré-enregistrés sur les répondeurs d'un nombre important de destinataires, par exemple dans un but publicitaire.

Dans ce cas, l'invention permet de réaliser de manière vocale l'équivalent d'un mailing adressé sous forme écrite à des destinataires enregistrés dans une base de données.

On comprend que l'invention fonctionne quel que soit l'opérateur téléphonique auprès duquel sont abonnés les destinataires du mailing.

Pour mettre en oeuvre l'invention, on peut utiliser des lignes téléphoniques analogiques ou numériques, unitaires ou groupées.

En variante, on dépose automatiquement un message vocal pré-enregistré sur un répondeur vocal d'une ligne configurée pour renvoyer vers le répondeur vocal les appels téléphoniques reçus lorsque la ligne est occupée en exécutant d'abord un procédé pour accéder directement au répondeur vocal autre que celui décrit ci-dessus, puis, sur le nouvel appel, en déposant le message vocal pré-enregistré selon un procédé pour émettre automatiquement le message vocal pré-enregistré conforme à l'invention.

La mise en oeuvre du procédé peut être réalisée par un logiciel serveur vocal permettant d'automatiser, par programmation informatique, les différentes étapes des procédés. A cet effet, on peut utiliser, par exemple, le logiciel open source Asterisk.

D'un point de vue matériel, le logiciel serveur vocal peut être exécuté sur un serveur informatique contenant une ou plusieurs cartes vocales. A cet effet, des cartes de la marque Digium peuvent être utilisées pour transformer les signaux téléphoniques en informations compréhensibles par le logiciel serveur vocal.

L'invention a également pour objet un programme d'ordinateur pour la mise en oeuvre du procédé décrit ci-dessus d'émission automatique d'un message vocal pré-enregistré à la fin d'un message d'accueil d'un répondeur vocal, caractérisé en ce qu'il comprend des instructions pour :
- écouter la ligne,
- attendre un silence d'au moins une durée prédéterminée avant de passer à l'étape suivante,
- émettre le message vocal pré-enregistré sur la ligne,
- pendant l'émission du message, continuer d'écouter la ligne,
si le silence est interrompu sur la ligne, revenir à la première étape d'écoute de la ligne.

L'invention a également pour objet un programme d'ordinateur pour la mise en oeuvre du procédé décrit ci-dessus de dépôt automatique d'un message vocal pré-enregistré sur un répondeur vocal d'une ligne configurée pour renvoyer vers le répondeur vocal les appels téléphoniques reçus lorsque la ligne est occupée, caractérisé en ce qu'il comporte des instructions pour :
- déclencher un premier groupe d'appels à destination de la ligne cible,
- attendre un premier délai prédéterminé, suffisamment long pour avoir placé la ligne à l'état occupé,
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne,
- écouter la ligne,
- attendre un silence d'au moins une durée prédéterminée avant de passer à l'étape suivante,
- émettre le message vocal pré-enregistré sur la ligne,
- pendant l'émission du message, continuer d'écouter la ligne,
- si le silence est interrompu sur la ligne, revenir à l'étape d'écoute de la ligne.

L'invention porte également sur les serveurs informatiques hébergeant les programmes décrits ci-dessus.

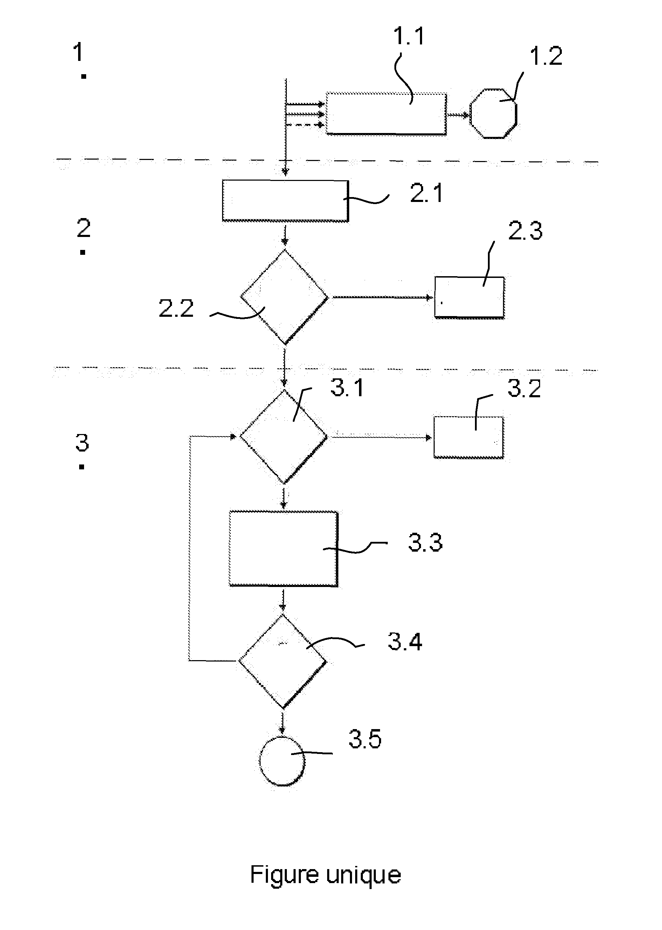

Afin de mieux faire comprendre l'invention, on va en décrire maintenant un exemple de réalisation, en référence au dessin annexé qui comporte une figure unique contenant un organigramme des étapes élémentaires exécutées par le logiciel serveur vocal vis à vis d'une ligne désignée « ligne cible ».

L'exécution du procédé de dépôt automatique d'un message vocal pré-enregistré sur le répondeur d'un destinataire se décompose en trois phases, à savoir une phase 1 d'accès à la ligne cible, une phase 2 d'accès au répondeur vocal et une phase 3 d'émission automatique d'un message sur le répondeur.

Lors de la phase 1 d'accès à la ligne cible, on déclenche (étape1.1 ) un premier groupe d'appels téléphoniques à destination de la ligne cible. Ces premiers appels peuvent être désignés « appels bloqueurs ». Chacun de ces appels bloqueurs est d'une durée prédéterminée qui est suffisamment courte pour ne pas faire sonner le téléphone raccordé à la ligne cible mais suffisamment longue pour que cette ligne soit placée, du fait des appels entrants simultanés, à l'état occupé.

Suivant le type d'abonnement et l'opérateur concerné, un appel bloqueur peut suffire mais plusieurs peuvent être nécessaires. Par exemple, si la ligne est capable de recevoir deux appels simultanés, au moins deux appels simultanés seront indispensables pour bloquer la ligne. En outre, les inventeurs ont remarqué que le fait d'émettre un nombre d'appels bloqueurs strictement supérieur au nombre d'appels entrants autorisés sur la ligne cible améliore statistiquement l'efficacité du procédé.

Avant de stopper les appels bloqueurs (étape 1.2), c'est-à-dire pendant le délai prédéterminé défini précédemment, on entre dans la phase 2 en déclenchant un nouvel appel (étape 2.1 ) à destination de la ligne cible. Ce nouvel appel arrivant sur une ligne occupée, il est renvoyé sur le répondeur vocal de la ligne cible, lequel commence à émettre un message d'accueil (étape 2.2).

En cas d'échec d'accès au répondeur (étape 2.3), le processus s'arrête et l'appel pourra être renouvelé ultérieurement (par un processus de relance non décrit). En cas de succès, on passe à la phase 3 d'émission automatique d'un message sur le répondeur. Cette phase commence par une première étape 3.1 d'écoute de la ligne téléphonique et l'attente d'un silence d'au moins une durée prédéterminée (par exemple 3 secondes). Tant qu'un silence de cette durée n'a pas été écouté sur la ligne, on ne passe pas à l'étape suivante. En cas d'attente trop longue, par exemple après une attente de 2 minutes, le procédé est interrompu (étape 3.2) et l'appel vers la même ligne cible devra être renouvelé ultérieurement.

En cas d'apparition d'un silence d'au moins la durée précédemment indiquée, on déclenche la lecture du message pré-enregistré (étape 3.3), ce qui permet d'émettre ce message vocal sur la ligne. Pendant l'émission du message vocal, on continue d'écouter la ligne cible (étape 3.4). Si le répondeur est effectivement passé en phase d'enregistrement du fait que le message d'accueil a été intégralement délivré, la ligne reste silencieuse et le message vocal émis sur la ligne est enregistré sur le répondeur. En revanche, si le silence sur la ligne téléphonique s'interrompt, cela signifie que le silence précédemment détecté ne marquait pas la fin du message vocal et on revient à l'étape 3.1 d'écoute de la ligne téléphonique et d'attente d'un silence suffisamment long.

Ce n'est que lorsqu'un nouveau silence est à nouveau détecté que le message vocal pré-enregistré est à nouveau délivré pour être enregistré sur le répondeur, selon le même déroulement que précédemment.

Une fois émise l'intégralité du message vocal pré-enregistré, on suppose que ce message a été convenablement enregistré sur le répondeur de la ligne cible et le procédé s'arrête (étape 3.5).

On voit que le procédé décrit ci-dessus ne dépend pas de l'architecture logicielle ou matérielle de l'opérateur auprès duquel le destinataire de la ligne est abonné.

Le procédé décrit ci-dessus peut bien entendu être mis en oeuvre pour accéder directement au répondeur d'un destinataire et déposer sur ce répondeur un message dicté oralement par un utilisateur.

Dans ce cas, seules les phases 1 et 2 d'accès à la ligne cible et d'accès au répondeur sont mises en oeuvre.

Il est bien entendu que le mode de réalisation qui vient d'être décrit ne présente aucun caractère limitatif et qu'il pourra recevoir toute modification désirable sans sortir pour cela du cadre défini par les revendications annexées.

En particulier, l'invention s'applique aussi bien à des lignes de téléphonie fixe qu'à des lignes de téléphonie mobile.

En outre, on pourra prévoir d'exploiter un procédé pour accéder directement au répondeur vocal d'une ligne téléphonique configurée pour renvoyer vers le répondeur vocal les appels téléphoniques reçus lorsque la ligne est occupée, consistant à exécuter les étapes suivantes :
- on déclenche un premier groupe d'appels à destination de la ligne cible,
- on attend un premier délai prédéterminé, suffisamment long pour avoir placé la ligne à l'état occupé,
- on déclenche un nouvel appel à destination de la ligne,
- on stoppe les appels du premier groupe au bout d'un second délai prédéterminé, plus long que le premier délai mais suffisamment court pour ne pas avoir fait sonner le téléphone de la ligne,
   indépendamment du procédé pour émettre automatiquement un message vocal pré-enregistré à la fin d'un message d'accueil d'un répondeur vocal, consistant à exécuter les étapes suivantes :
- on écoute la ligne,
- on attend un silence d'au moins une durée prédéterminée avant de passer à l'étape suivante,
- on émet le message vocal pré-enregistré sur la ligne,
- pendant l'émission du message, on continue d'écouter la ligne,
- si le silence est interrompu sur la ligne, on revient à la première étape d'écoute de la ligne.

De façon analogue, on pourra prévoir d'exploiter un programme d'ordinateur pour la mise en oeuvre d'un procédé d'accès direct au répondeur vocal d'une ligne téléphonique configurée pour renvoyer vers le répondeur vocal les appels téléphoniques reçus lorsque la ligne est occupée, comprenant des instructions pour :
- déclencher un premier groupe d'appels à destination de la ligne cible,
- attendre un premier délai prédéterminé, suffisamment long pour avoir placé la ligne à l'état occupé,
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne,
   indépendamment du programme d'ordinateur pour la mise en oeuvre du procédé d'émission automatique d'un message vocal pré-enregistré à la fin d'un message d'accueil d'un répondeur vocal, comprenant des instructions pour :
- écouter la ligne,
- attendre un silence d'au moins une durée prédéterminée avant de passer à l'étape suivante,
- émettre le message vocal pré-enregistré sur la ligne,
- pendant l'émission du message, continuer d'écouter la ligne,
- si le silence est interrompu sur la ligne, revenir à la première étape d'écoute de la ligne.

## Revendications

1. Procédé pour émettre automatiquement un message vocal pré-enregistré à la fin d'un message d'accueil d'un répondeur vocal, **caractérisé en ce qu'**il consiste à exécuter les étapes suivantes :
- on écoute la ligne,
- on attend un silence d'au moins une durée prédéterminée avant de passer à l'étape suivante,
- on émet le message vocal pré-enregistré sur la ligne,
- pendant l'émission du message, on continue d'écouter la ligne,
- si le silence est interrompu sur la ligne, on revient à la première étape d'écoute de la ligne.

2. Procédé pour déposer automatiquement un message vocal pré-enregistré sur un répondeur vocal d'une ligne configurée pour renvoyer vers le répondeur vocal les appels téléphoniques reçus lorsque la ligne est occupée, **caractérisé par le fait que** l'on exécute d'abord les étapes suivantes pour accéder directement au répondeur vocal:
- on déclenche un premier groupe d'appels à destination de la ligne cible,
- on attend un premier délai prédéterminé, suffisamment long pour avoir placé la ligne à l'état occupé,
- on déclenche un nouvel appel à destination de la ligne,
- on stoppe les appels du premier groupe au bout d'un second délai prédéterminé, plus long que le premier délai mais suffisamment court pour ne pas avoir fait sonner le téléphone de la ligne
puis, sur le nouvel appel, on exécute le procédé selon la revendication 1 pour émettre automatiquement un message vocal pré-enregistré à la fin du message d'accueil du répondeur vocal, puis on stoppe le nouvel appel.

3. Programme d'ordinateur pour la mise en oeuvre du procédé selon la revendication 1 d'émission automatique d'un message vocal pré-enregistré à la fin d'un message d'accueil d'un répondeur vocal, **caractérisé en ce qu'**il comprend des instructions pour :
- écouter la ligne,
- attendre un silence d'au moins une durée prédéterminée avant de passer à l'étape suivante,
- émettre le message vocal pré-enregistré sur la ligne,
- pendant l'émission du message, continuer d'écouter la ligne,
- si le silence est interrompu sur la ligne, revenir à la première étape d'écoute de la ligne.

4. Programme d'ordinateur pour la mise en oeuvre du procédé selon la revendication 2 de dépôt automatique d'un message vocal pré-enregistré sur un répondeur vocal d'un ligne configurée pour renvoyer vers le répondeur vocal les appels téléphoniques reçus lorsque la ligne est occupée, **caractérisé en ce qu'**il comporte des instructions pour :
- déclencher un premier groupe d'appels à destination de la ligne cible,
- attendre un premier délai prédéterminé, suffisamment long pour avoir placé la ligne à l'état occupé,
- déclencher un nouvel appel à destination de la ligne,
- stopper les appels du premier groupe au bout d'un second délai prédéterminé, plus long que le premier délai mais suffisamment court pour ne pas avoir fait sonner le téléphone de la ligne,
- écouter la ligne,
- attendre un silence d'au moins une durée prédéterminée avant de passer à l'étape suivante,
- émettre le message vocal pré-enregistré sur la ligne,
- pendant l'émission du message, continuer d'écouter la ligne,
- si le silence est interrompu sur la ligne, revenir à l'étape d'écoute de la ligne.

5. Serveur informatique hébergeant un programme d'ordinateur selon la revendication 3 ou 4.
